# EUROPÄISCHE PATENTSCHRIFT

(11) **EP 1 426 728 B1**
(45) Veröffentlichungstag und Bekanntmachung des Hinweises auf die Patenterteilung: **22.04.2015**
(21) Anmeldenummer: 04002389.7
(22) Anmeldetag: 19.05.2001
(51) Int. Cl.: G01B 7/00, G01B 7/30, G01D 5/20

(54) **Wegmesssystem**
Position measurement system
Dispositif de mesure de position

(30) Priorität: 24.05.2000 DE 10025661
(43) Veröffentlichungstag der Anmeldung: 09.06.2004
(62) Teilanmeldung aus: 01112304.9
(73) Patentinhaber: BALLUFF GmbH, 73765 Neuhausen (DE)
(72) Erfinder: Jagiella, Manfred, 73274 Notzingen (DE)
(74) Vertreter: Hoeger, Stellrecht & Partner Patentanwälte

(56) Entgegenhaltungen:
- WO-A-97/39312
- DE-A- 2 511 683
- DE-A- 4 311 973
- DE-A- 4 406 417
- FR-A- 2 682 760

## Beschreibung

Die Erfindung betrifft ein Wegmeßsystem mit einem Geber, einem Sensor, welcher eine Mehrzahl Induktiver Elemente umfaßt, an die der Geber elektromagnetisch koppelt, und mit einer Auswerteeinheit für Sensorsignale, wobei Sensor und Geber relativ zueinander positionierbar sind und der Sensor eine Mehrzahl von durch die induktiven Elemente gebildete Spuren umfaßt.

Wegmeßsysteme mit einem Geber, einem Sensor, welcher eine Mehrzahl induktiver Elemente umfaßt, an die der Geber elektromagnetisch koppelt, und mit einer Auswerteeinheit für Sensorsignale, wobei Sensor und Geber relativ zueinander positionierbar sind und der Sensor eine Mehrzahl von durch die induktiven Elemente gebildete Spuren umfaßt, werden beispielsweise zur Positionsmessung an pneumatischen Zylindern eingesetzt, zur Messung von Ventilstellung (insbesondere in Regelkreisen) oder bei Greifern. Für solche Anwendungen ist es sehr vorteilhaft, wenn ein Relativweg zwischen Geber und Sensor absolut meßbar ist.

Bei einem aus dem Stand der Technik bekannten Wegsensor ist eine Sekundärspule über einen langgestreckten weichmagnetischen Sensorkern gewickelt. Jeweils an den Enden des Sensorkerns sind Primärspulen aufgewickelt.

Als Geber wird ein Magnet eingesetzt, welcher längs des Sensorkerns verfahrbar ist. Durch Strombeaufschlagung der Primärspulen wird in der Sekundärspule eine Spannung induziert. Diese Induktionsspannung ist durch den Magneten beeinflußt, welcher den magnetischen Sensorkern in seiner unmittelbaren Nähe in Sättigung bringt. Der Stromfluß durch die Sekundärspule ist dann durch die relative Position zwischen dem Magneten und dem weichmagnetischen Sensorkern beeinflußt und der Strom durch die Sekundärspule hängt ab von der Magnetposition.

Bei einer aus der DE 43 11 973 A1 bekannten magneto-induktiven Sensorzeile für eine magnetische Positions- und/oder Wegbestimmung eines der Sensorzeile benachbarten Magneten ist auf einer flächigen magnetisch leitfähigen Schicht, welche in magnetische Sättigung versetzbar ist, eine Mehrzahl von nebeneinander und/oder übereinander angeordneten Flachspulen vorgesehen, wobei benachbarte Spulen ein Sender-Empfängersystem bilden und die Position des Magneten die Sende-/Empfangscharakteristik der Spulen beeinflußt und sich so seine Position detektieren läßt.

Aus der DE 25 11 683 C3 und der DE 39 13 861 A1 sind induktive Stellungsgeber bekannt, bei denen ein ferromagnetischer Kern zusammen mit einer von Wechselstrom durchflossenen Primärspule als Tastglied ausgebildet ist, welches wiederum einen magnetischen Fluß ausbildet. Dieser Magnetfluß wird mit einer Sekundärwicklung verkettet und die in dieser Wicklung induzierte Spannung ist abhängig von der Stellung des Kerns.

Aus der FR 2 682 760 A1 ist ein Verschiebungssensor bekannt, bei welchem auf einem Träger ein Primärkreis und ein Sekundärkreis angeordnet sind. Der Primärkreis ist mit einem Wechselstrom beaufschlagt und koppelt an den Sekundärkreis, in dem eine Wechselspannung induziert wird. Ein Geber aus einem ferromagnetischen Material beeinflußt diese Induktionsspannung in Abhängigkeit von seiner relativen Position zu dem Sekundärkreis.

Wegmeßsysteme, bei denen sich die Größe des wirksamen Sensorbereichs im Verlauf des Meßwegs ändert, sind z. B. aus DE 196 19 197, EP 0 557 608, DE 25 20 851, US 5 867 022 und DE 44 06 417 bekannt.

Aus der nicht vorveröffentlichten DE 100 44 839 A1 ist ein Positionssensor zur berührungslosen Erfassung der Position eines ortsveränderlichen Objekts mit einer mit dem Objekt starr verbundenen, ein Magnetfeld erzeugenden Feldeinrichtung, die eine der Ortsveränderung des Objekts entsprechenden Auslenkung aus einer Bezugsposition erfährt, bekannt. Es ist eine Schleifeneinrichtung vorgesehen, die zwei Einzelspulen aufweist, welche jeweils aus wenigstens einem Leiter mit an die Auslenkung der Feldeinrichtung angepaßter Ausdehnung und mit sich gegenseitig umschließenden Windungen mit sich von einer Breitseite zu einer Schmalseite verjüngender Außenkontur gebildet sind und welche mit entgegengesetzter Verjüngungsrichtung nebeneinander angeordnet sind. Die Schleifeneinrichtung ist auf wenigstens einer Flachseite mit einer weichmagnetischen Schicht versehen. Über zugeordnete Mittel läßt sich die magnetische Induktion der Einzelspulen messen, welche von der magnetischen Sättigung der weichmagnetischen Schicht an der Position der berührungslos über dem Aufbau aus der Schicht und der Schleifeneinrichtung zu führenden Feldeinrichtung abhängig ist. Ferner läßt sich eine Differenzbildung der Induktionssignale bezüglich der Einzelspulen durchführen.

Davon ausgehend liegt der Erfindung die Aufgabe zugrunde, ein gattungsgemäßes Wegmeßsystem zu schaffen, welches einfach ausgebildet ist und sich somit kostengünstig herstellen läßt und das universell einsetzbar ist.

Diese Aufgabe wird bei dem eingangs genannten Wegmeßsystem erfindungsgemäß durch die kennzeichnenden Merkmale gemäß Anspruch 1 gelöst.

Erfindungsgemäß wird nicht eine über eine Primärspule in einer Sekundärspule induzierte Spannung gemessen, sondern eine Güte und/oder effektive Induktivität der induktiven Elemente des Sensors ausgewertet. Es muß deshalb auch keine Primärspule mit Energie versorgt werden, so daß das erfindungsgemäße Wegmeßsystem einfacher aufgebaut ist. Zudem läßt sich bei der erfindungsgemäßen Vorrichtung der Geber, der einen Magneten umfaßt, als passives Element ausbilden, so daß er insbesondere nicht über Energiezuführungsleitungen mit Strom beaufschlagt werden muß.

Erfindungsgemäß ist es vorgesehen, daß die Güte und/oder effektive Induktivität der induktiven Elemente, welche ein Maß ist für die relative Position zwischen Geber und Sensor, durch die Größe des wirksamen Sensorbereichs und/oder die Größe des wirksamen Geberbereichs bestimmt ist. Das Sensorsignal ist damit durch die geometrische Struktur des Sensors bzw. des Gebers bestimmt. In der geometrischen Form des wirksamen Sensorbereichs bzw. wirksamen Geberbereichs, welche miteinander koppeln, ist die Information über die relative Position zwischen Geber und Sensor und damit die Weginformation bzw. Positionsinformation der relativen Position zwischen Geber und Sensor enthalten. Der wirksame Sensorbereich bzw. der wirksame Geberbereich wiederum ist durch die Formgebung des Sensors und damit insbesondere des induktiven Elements bzw. durch die Formgebung des Gebers bestimmt. Dadurch ist das erfindungsgemäße Wegmeßsystem einfach ausgebildet und läßt sich kostengünstig herstellen.

Durch eine entsprechende Formgebung des Sensors bzw. des Gebers läßt sich das erfindungsgemäße Wegmeßsystem universell einsetzen und insbesondere auch in einem Drehgeber einsetzen. Es muß neben dem induktiven Element keine weitere Sekundärspule oder dergleichen vorgesehen werden. Grundsätzlich genügt es, ein einziges induktives Element vorzusehen, welches so ausgebildet ist, daß ein wirksamer Sensorbereich und/oder ein wirksamer Geberbereich, welcher an das induktive Element koppelt, abhängig ist von der relativen Position zwischen Geber und Sensor. Erfindungsgemäß sind mindestens zwei induktive Elemente vorgesehen. Auf diese Weise können Differenzmessungen und zuzätzlich Summenmessungen durchgeführt werden, um eine gute Meßgenauigkeit und Meßauflösung zu erhalten. Erfindungsgemäß sind mehrere Meßspuren vorgesehen, beispielsweise eine Meßspur für Grobmessungen und eine Meßspur für Feinmessungen. Da eben die Ortsinformation in der Formgebung des wirksamen Sensorbereichs bzw. wirksamen Geberbereichs enthalten ist, lassen sich durch entsprechende Formgebung eine Vielzahl von Anwendungsmöglichkeiten realisieren.

Eine Meßauflösung ist dabei direkt über die Formgebung des wirksamen Sensorbereichs bzw. des wirksamen Geberbereichs einstellbar. Es lassen sich dabei problemlos Auflösungen mindestens in der Größenordnung eines Tausendstels der gesamten Wegstrecke, welche Sensor und Geber relativ zueinander einnehmen können, realisieren.

Da das Sensorsignal bestimmt ist durch einen wirksamen Sensorbereich und/oder durch einen wirksamen Geberbereich, und damit das Sensorsignal direkt bestimmt ist durch eine effektive Induktivität der induktiven Elemente des Sensors, kann durch bekannte Auswerteschaltungen für induktive Näherungsschalter, bei denen die Annäherung eines metallischen Gegenstands an eine Oszillatorspule beispielsweise über eine Amplitudenänderung oder Frequenzänderung des Oszillators registriert wird, verwendet werden. Es kann somit auf bereits vorhandene Auswerteeinheiten zurückgegriffen werden. Das erfindungsgemäße Wegmeßsystem läßt sich insbesondere mit einem Typ von Auswerteeinheit versehen, unabhängig davon, wie die spezielle Gestaltung des Gebers oder des induktiven Elements ist, da die Auswerteeinheit im wesentlichen nur eine Kenngröße dieses induktiven Elements bestimmt.

Der Geber umfaßt einen Magneten. Das Magnetfeld des Magneten beeinflußt das induktive Element und diese Beeinflussung äußert sich insbesondere in einer Änderung der effektiven Induktivität des induktiven Elements. Diese Änderung der effektiven Induktivität wiederum hängt ab von dem wirksamen Sensorbereich des induktiven Elements, welcher durch das Magnetfeld beaufschlagt ist. Mit einem solchen Geber kann auch durch metallische Wände hindurch gemessen werden. Beispielsweise läßt sich die Position eines mit einem solchen Geber versehenen Kolbens durch eine Wand eines Druckmittelzylinders aus Aluminium hindurch von außen detektieren.

Vorgesehen ist dabei, daß an oder in der Nähe des induktiven Elements ein weichmagnetisches Material angeordnet ist. Bei dem weichmagnetischen Material handelt es sich beispielsweise um ein Mu-Metall in Folienform, welches eine möglichst hohe magnetische Permeabilität und einen möglichst kleinen elektrischen Leitwert aufweist. Durch das Magnetfeld des Gebers läßt sich das weichmagnetische Material lokal in Sättigung bringen, und durch diese lokale Sättigung ist ein wirksamer Sensorbereich definiert. Die lokale Sättigung am wirksamen Sensorbereich wiederum bewirkt eine relativ starke Änderung der effektiven Induktivität, die somit leicht ermittelbar ist.

Vorteilhaft ist es, wenn der Sensor und/oder der Geber so ausgebildet sind, daß ein Überlappungsbereich zwischen einer Projektion einer wirksamen Geberfläche auf den Sensor mit einer wirksamen Sensorfläche abhängig ist von der relativen Position zwischen Sensor und Geber quer zur Projektionsrichtung. Die Formgebung des Sensors und insbesondere des induktiven Elements und/oder die Formgebung des Gebers, durch die jeweils die wirksame Sensorfläche bzw. die wirksame Geberfläche bestimmt ist, bestimmt dann die Abhängigkeit der Kopplung zwischen Sensor und Geber quer zur Projektionsrichtung. Aus dieser Abhängigkeit wiederum läßt sich die relative Position zwischen Sensor und Geber quer zur Projektionsrichtung (quer zur Abstandsrichtung zwischen Sensor und Geber) ermitteln.

Wenn das induktive Element an einen Oszillator gekoppelt ist und über seine Güte und/oder effektive Induktivität Kenngrößen des Oszillators wie Amplitude, Phasenlage und Frequenz beeinflußt, läßt sich eine - ortsabhängige - Ankopplung eines Gebers an das induktive Element auf einfache Weise auswerten, indem die entsprechenden Kenngrößen des Oszillators ausgewertet werden. Das induktive Element, welches an den Oszillator gekoppelt ist, ist dabei so an den Oszillator gekoppelt, daß dieser selber beeinflußbar ist. Ein Spezialfall der Kopplung des induktiven Elements an den Oszillator ist, daß das induktive Element selber die Induktivität des Oszillators bildet.

Die relative Position zwischen Sensor und Geber läßt sich auf einfache Weise ermitteln, wenn die Auswerteeinheit eine Kenngröße des Oszillators ermittelt. Ein Geber, welcher metallisch ausgebildet ist und insbesondere elektrisch leitend ist oder magnetisch ist, stellt eine Gegeninduktivität zu dem induktiven Element des Sensors dar. Die Ankopplung der Induktivitäten bewirkt eine Änderung der effektiven Induktivität des induktiven Elements. Diese Änderung der effektiven Induktivität läßt sich auf einfache Weise messen. Bei einer Variante einer Ausführungsform ist es vorgesehen, daß als Kenngröße des Oszillators eine Frequenz des Oszillators gemessen wird, an den das induktive Element gekoppelt ist. Die Frequenz eines LC-Schwingkreises ist im wesentlichen umgekehrt proportional zu der Wurzel aus der effektiven Induktivität.

Diese läßt sich dann auf einfache Weise ermitteln. Diese Variante ist besonders vorteilhaft. Da der Geber ein Magnet ist, tritt dadurch eine relativ starke Induktivitätsänderung auf, die sich dementsprechend auf die Frequenz des Schwingkreises auswirkt, wobei das weichmagnetische Material, das in Sättigung bringbar ist, am Sensor angeordnet ist.

Bei einer alternativen Variante einer Ausführungsform wird eine Amplitude des Oszillators ermittelt, an welchen das induktive Element gekoppelt ist. Die Amplitude eines Oszillators und insbesondere Schwingkreises hängt wiederum von der effektiven Induktivität bzw. Güte des induktiven Elements des Sensors ab. Sie läßt sich auf einfache Weise ermitteln. Insbesondere lassen sich Amplitudenänderungen ermitteln, die relativ gering sind.

Ganz besonders vorteilhaft ist es, wenn das induktive Element flächig ausgebildet ist und insbesondere als Flachspule ausgebildet ist. Der wirksame Sensorbereich, an welchen der Geber koppelt, liegt dann in einer Fläche. Dementsprechend läßt sich über die Formgestaltung einer solchen Flachspule der wirksame Sensorbereich gezielt einstellen, um über die Größe des wirksamen Sensorbereichs die relative Position zwischen Sensor und Geber ermitteln zu können. Eine Flachspule ist auch auf einfache Weise herstellbar und insbesondere mit einer hohen Herstellungsreproduzierbarkeit herstellbar; bei gewickelten dreidimensionalen Spulen ist die Herstellungsstreuung erheblich größer als bei Flachspulen. Ganz besonders vorteilhaft ist es dabei, wenn das induktive Element als Printspule ausgebildet ist. Die entsprechenden Spulenwindungen lassen sich dabei auf einfache Weise beispielsweise mittels eines Belichtungsverfahrens auf eine Platine bringen. Dadurch wiederum lassen sich eine Vielzahl von Spulenformen herstellen, um so eine hohe Variabilität bei der Anwendung zu erreichen.

Günstig ist es, wenn die Auswerteeinheit auf einer Platine angeordnet ist, auf welcher das induktive Element sitzt. Es sind dann Auswerteeinheit und induktives Element auf einer Platine integriert. Dadurch läßt sich der erfindungsgemäße Sensor einfach und kostengünstig herstellen und entsprechend einfach ist auch der Einbau beispielsweise in ein Gehäuse.

Günstig ist es, wenn die meßbare Wegstrecke zwischen Geber und Sensor im wesentlichen durch eine Länge des induktiven Elements bestimmt ist. Durch die Formgestaltung des induktiven Elements läßt sich dann für eine spezielle Anwendung gezielt ein Meßweg einstellen, innerhalb welchem die relative Position zwischen Sensor und Geber ermittelbar ist. Durch die einfache Herstellbarkeit des induktiven Elements insbesondere als Printspule ist dann über die Formgestaltung des induktiven Elements eine gezielte Einstellung der entsprechenden Parameter des erfindungsgemäßen Wegmeßsystems erreicht.

Da der Geber, der einen Magneten umfaßt, ein passives Element ist, ist dieser nicht mit einer Energiequelle verbunden, und eine elektromagnetische Ankopplung an das induktive Element wird dennoch bewirkt. Dadurch läßt sich ein konstruktiv einfacher Aufbau des erfindungsgemäßen Wegmeßsystems erreichen und dieses ist kostengünstig herstellbar und einsetzbar, da keine Energiezuführungsleitungen zu dem Geber vorgesehen werden müssen, die eventuell mit diesem mitbewegt werden müssen. Es muß dann natürlich auch keine Energiequelle für den Geber vorgesehen werden.

Bei einer Variante einer Ausführungsform ist auf einer Platine, auf welcher das induktive Element sitzt, ein weichmagnetisches Material beispielsweise einseitig oder beidseitig aufgebracht. Der erfindungsgemäße Sensor läßt sich dann auf einfache Weise herstellen. Insbesondere kann es vorgesehen sein, daß eine Platine, auf welcher das induktive Element sitzt, mit einem weichmagnetischen Material umwickelt ist.

Grundsätzlich ist es so, daß ein wirksamer Sensorbereich, welcher abhängig ist von der Positionierung eines Gebers zu dem Sensor, dadurch eingestellt werden kann, daß das induktive Element derart ausgestaltet ist, daß seine Form längs einer Meßstrecke quer zu der Meßstrecke variiert. Es ist auch alternativ oder zusätzlich möglich, daß das weichmagnetische Material in einer derartigen Form angeordnet ist, daß die Formabmessung quer zu einer Meßstrecke längs der Meßwegstrecke variiert. Da durch das weichmagnetische Material ein wirksamer Sensorbereich lokal in Sättigung bringbar ist, ist durch die Formgestaltung des weichmagnetischen Materials selber auch ein wirksamer Sensorbereich bestimmt. Außerhalb des weichmagnetischen Materials ist eben die Feldbeaufschlagung des Sensors anders als an dem weichmagnetischen Material, und damit ist der wirksame Sensorbereich dann durch die Form der Aufbringung des weichmagnetischen Materials bestimmt. Insbesondere ist es vorgesehen, daß das weichmagnetische Material dreieckförmig angeordnet ist. Dadurch ändert sich längs der Meßstrecke die Querabmessung der Aufbringung des weichmagnetischen Materials und aus der Variation der Querabmessung läßt sich die relative Position zwischen Geber und Sensor bestimmen.

Es ist vorgesehen, daß das induktive Element derart ausgebildet ist, daß seine Gestalt quer zu einer Meßwegstrecke längs der Meßwegstrecke variiert. Dies läßt sich auf einfache Weise über die entsprechende Windungsausbildung einer Flachspule erreichen. Durch die Änderung seiner Form quer zu der Meßstrecke variiert der wirksame Sensorbereich. Die Größe des wirksamen Sensorbereichs wiederum ist verantwortlich für das Sensorsignal und dieses Sensorsignal beinhaltet dann die Information über die relative Position zwischen Sensor und Geber. Bei einer einfach herstellbaren Variante einer Ausführungsform weist das induktive Element dreieckförmige Windungen auf. Es liegt dann im Bereich einer Dreiecksspitze eine größere umschlossene Fläche vor als im Bereich einer Basis des Dreiecks. Dadurch wiederum variiert die Größe eines wirksamen Sensorbereichs, wenn ein Geber an das induktive Element koppelt.

Bei einer Variante einer Ausführungsform erstreckt sich das induktive Element in einem Winkelbereich, um Drehungen messen zu können. Wird der Geber dann in einer Kreisbahn über dem induktiven Element bewegt, dann läßt sich die relative Drehposition zwischen Geber und Sensor ermitteln. Das induktive Element ist dabei so ausgebildet, daß ein wirksamer Sensorbereich längs des Winkelbereichs variiert. Insbesondere ist es vorteilhaft, wenn der Winkelbereich im wesentlichen einen Vollkreis umfaßt. Dadurch können dann Drehpositionen in einem vollen Winkelbereich gemessen werden.

Bei einer weiteren Ausführungsform umfaßt der Geber ein elektrisch leitendes oder magnetisch leitendes Element. Dieses Element koppelt dann induktiv als Gegeninduktivität an das induktive Element des Sensors und verändert dadurch die effektive Induktivität des induktiven Elements. Aus dieser Änderung wiederum, welche abhängig ist von der relativen Position zwischen Sensor und Geber, läßt sich eben diese relative Position ermitteln. Ganz besonders vorteilhaft ist es dabei, wenn der Überdeckungsbereich zwischen einem wirksamen Geberbereich und dem induktiven Element längs einer Wegmeßstrecke variiert. Diese Variation kann grundsätzlich, wie bereits oben ausgeführt, durch eine entsprechende Ausbildung des induktiven Elements erreicht werden. Der Geber kann je nach Anwendung beispielsweise als Zunge, als Bügel, welcher über dem induktiven Element verfahrbar ist, als Ring mit beispielsweise rundem oder rechteckigem Querschnitt oder als Rohr usw. ausgebildet sein.

Weiterhin kann es vorgesehen sein, daß der Geber so ausgebildet ist, däß ein wirksamer Geberbereich, welcher an das induktive Element koppelt, in seiner Gestalt quer zu einer Meßwegstrecke längs der Meßwegstrecke variiert. Der wirksame Geberbereich bestimmt die Ankopplung des Gebers an den Sensor. Durch entsprechende Ausgestaltung dieses wirksamen Geberbereichs und insbesondere durch eine Variation längs der Meßwegstrecke ist dadurch dann die Ankopplung abhängig von der relativen Position zwischen Geber und Sensor. Dadurch wiederum läßt sich aus dem Sensorsignal eindeutig diese relative Position bestimmen. Bei einer Variante einer Ausführungsform ist es vorgesehen, daß die Meßwegstrecke linear ist. Bei einer weiteren Variante ist die Meßwegstrecke kreisförmig ausgebildet, so daß insbesondere das erfindungsgemäße Wegmeßsystem als Drehgeber einsetzbar ist. Je nach Einsatzvariante ist entsprechend der wirksame Geberbereich ausgebildet. Insbesondere ändert sich die Flächendichte des Gebers längs der Meßwegstrecke, um einen wirksamen Geberbereich mit einer Quervariation auszubilden.

Bei einer Variante eines Ausführungsbeispiels ist der Geber mit einer dreieckförmigen Struktur versehen. Durch eine solche Struktur läßt sich auf einfache Weise eine Variation eines wirksamen Geberbereichs erreichen. Ist die dreieckförmige Struktur ringförmig angeordnet, dann lassen sich damit auch Drehbewegungen messen.

Der wirksame Geberbereich läßt sich beispielsweise durch eine Beschichtung auf dem Geber bilden. Bei dem Beschichtungsmaterial kann es sich beispielsweise um ein Mu-Metall oder um eine Ferritbeschichtung handeln. Es kann auch vorgesehen sein, daß der Geber mit Ausnehmungen versehen ist und insbesondere mit durchgehenden Öffnungen. An diesen Ausnehmungen fehlt Gebermaterial und somit ist der wirksame Geberbereich abhängig von der Größe und der Verteilung der Ausnehmungen im Geber.

Bei einer vorteilhaften Variante einer Ausführungsform eines erfindungsgemäßen Wegmeßsystems ist der Sensor von einem induktiven Näherungssensor mit einem Schwingkreis, welcher ein induktives Element aufweist, umfaßt. Derartige Näherungssensoren, welche insbesondere Analogsensoren sind, sind bekannt. Diese lassen sich mit einem entsprechend ausgebildeten Geber verwenden, um absolute Wegmessungen für die relative Position zwischen Geber und Sensor durchzuführen. Die entsprechende Ausgestaltung des Gebers, d. h. die Variation des wirksamen Geberbereichs, welcher an den Näherungssensor koppeln kann, bestimmt dann das Sensorsignal, welches wiederum dann Informationen über den wirksamen Geberbereich und damit über die relative Position zwischen Sensor und Geber enthält.

Günstig ist es, wenn eine magnetische Abschirmung für das induktive Element vorgesehen ist. Dadurch sind die induktiven Elemente von Streufeldern und dergleichen geschützt, die in das induktive Element einkoppeln können und somit das Meßsignal verfälschen können. Durch eine magnetische Abschirmung, welche insbesondere als magnetischer Käfig ausgebildet sein kann, wird dadurch die Meßgenauigkeit erhöht.

Da eine Mehrzahl von induktiven Elementen vorgesehen ist, läßt sich eine breite Anwendungsvariabilität erreichen. Es können Differenzmessungen und zusätzlich Summenmessungen durchgeführt werden oder die induktiven Elemente können so angeordnet sein, daß der Sensor mehrere Meßspuren umfaßt, beispielsweise für Grobmessungen und Feinmessungen.

Erfindungsgemäß umfaßt der Sensor eine Mehrzahl von durch induktive Elemente gebildeten Spuren. Die Spuren werden für Differenzmessungen eingesetzt, d. h. es läßt sich ein Differentialsystem ausbilden. Die Spuren sind dabei gegenläufig ausgebildet. Es kann sich auch die Formgestaltung der Spulen unterscheiden, um beispielsweise eine Spur für eine Feinmessung und eine Spur für eine Grobmessung der relativen Position zwischen Sensor und Geber auszubilden.

Günstig ist es, wenn eine Mehrzahl von induktiven Elementen bezüglich des Gebers so angeordnet und beschaltet sind, daß eine Wegmessung durchführbar ist, die im wesentlichen unabhängig von dem Abstand des Gebers zu dem Sensor ist. Grundsätzlich hängt die elektromagnetische Kopplung des Gebers an das induktive Element von dessen Abstand zu dem induktiven Element ab. Ändert sich dieser Abstand, dann wird dadurch das Sensorsignal beeinflußt, ohne daß sich die relative Position zwischen Sensor und Geber quer zur Abstandsrichtung ändert. Durch die erfindungsgemäße Anordnung einer Mehrzahl von induktiven Elementen läßt sich diese Abstandsabhängigkeit kompensieren, so daß die relative Position zwischen Sensor und Geber quer zu der Abstandsrichtung unabhängig davon ist, ob sich eben der Abstand zwischen Sensor und Geber längs der Abstandsrichtung ändert.

Günstig ist es dabei, wenn ein Geber zwischen zwei in einem Abstand angeordneten induktiven Elementen positioniert ist. Insbesondere sind dabei die induktiven Elemente gegenläufig geführt. Sie können aber auch gleichsinnig geführt sein. Durch Differenzbildung bezüglich Sensorsignalen der beiden induktiven Elemente läßt sich dann die Abstandsabhängigkeit eliminieren. Es kann auch vorgesehen sein, daß eine Summenbildung bezüglich Sensorsignalen der beiden induktiven Elemente durchgeführt wird. Aus dem Summensignal läßt sich dann eben der Abstand zwischen Geber und Sensor ermitteln. Es läßt sich also erfindungsgemäß eine Positionsbestimmung zwischen Sensor und Geber quer zur Abstandsrichtung zwischen Sensor und Geber durchführen und auch eine Positionsbestimmung bezüglich des Abstands zwischen Sensor und Geber, d. h. bezüglich der Höhe, über welcher der Geber über dem Sensor angeordnet ist.

Bei einer vorteilhaften Variante einer Ausführungsform ist das induktive Element auf einem flexiblen Träger angeordnet. Insbesondere ist dabei das induktive Element auf einer Flexfolie angeordnet. Dadurch läßt sich der Träger mit dem aufgebrachten induktiven Element in eine bestimmte Gestalt bringen, um so beispielsweise den Träger mit dem induktiven Element an Konturen einer Bahnführung oder dergleichen anzupassen. Es kann beispielsweise vorteilhaft sein, wenn sich aufgrund einer wellenartigen Bewegung des Gebers die Meßstrecke an die Bewegung des Gebers so angepaßt ist, daß der Abstand zwischen Sensor und Geber im wesentlichen konstant gehalten ist. Es muß dann das induktive Element ebenfalls in einer Wellenform angeordnet werden. Dies läßt sich über einen flexiblen Träger, welcher auf einem entsprechenden wellenförmigen Untergrund positioniert wird, erreichen. Insbesondere ist eine einzige Auswerteeinheit vorgesehen, welche eine Differenzbildung und eventuell zusätzlich Summenbildung durchführt, um ein entsprechendes Meßsignal zu erhalten; erfindungsgemäß ist insbesondere vorgesehen, daß einer Auswerteeinheit eine Mehrzahl von Sensorelementen und insbesondere eine Mehrzahl von induktiven Elementen zugeordnet ist.

Ganz besonders vorteilhaft ist es, wenn der Sensor und/oder der Geber so ausgebildet sind, daß über entsprechende Formgebung ein bestimmter Kennlinienverlauf des Wegmeßsystems für ein Sensorsignal in Abhängigkeit eines Meßwegs eingestellt ist. Dadurch kann ein für eine Anwendung gewünschter Kennlinienverlauf gezielt eingestellt werden.

Günstig ist es, wenn von der Auswerteeinheit ein Fehlersignal abzweigbar ist, wobei durch die Auswerteeinheit überprüfbar ist, ob ein oder mehrere Parameter des induktiven Elements in einem Toleranzbereich liegen. Insbesondere wird überprüft, ob die Güte und/oder effektive Induktivität nicht nach oben oder unten zu stark von noch tolerablen Werten abweicht. Es wird also eine Plausibilitätsprüfung durchgeführt, mittels der sich beispielsweise ein Spulenbruch, ein Kurzschluß oder auch ein Fehlen/Wegfahren des Gebers aus dem Meßbereich detektieren läßt.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung in Draufsicht eines Beispiels eines Wegmeßsystems;
- Figur 2: eine schematische perspektivische Darstellung eines zweiten Beispiels eines Wegmeßsystems;
- Figur 3: eine Draufsicht auf einen Sensor mit einer Printspule als induktivem Element;
- Figur 4: eine schematische Darstellung eines dritten Beispiels eines Wegmeßsystems ins Draufsicht;
- Figur 5: eine schematische perspektivische Darstellung eines vierten Beispiels eines Wegmeßsystems mit einer Metallzunge als Geber;
- Figur 6: eine Draufsicht auf ein Beispiel einer Metallzunge;
- Figur 7: eine Draufsicht auf ein weiteres Beispiel einer Metallzunge;
- Figur 8a: eine schematische Darstellung eines fünften Beispiels eines Wegmeßsystems in Draufsicht;
- Figur 8b: ein Induktivitäts (L)-Weg (x)-Diagramm, in welchem die Abhängigkeit der Induktivität des induktiven Elements in Abhängigkeit von dem Ort eines Gebermagneten (Fig. 8a) gezeigt ist und
- Figur 9: ein Ausführungsbeispiel eines induktiven Elements, wie es für ein erfindungsgemäßes Wegmeßsystem verwendbar ist.

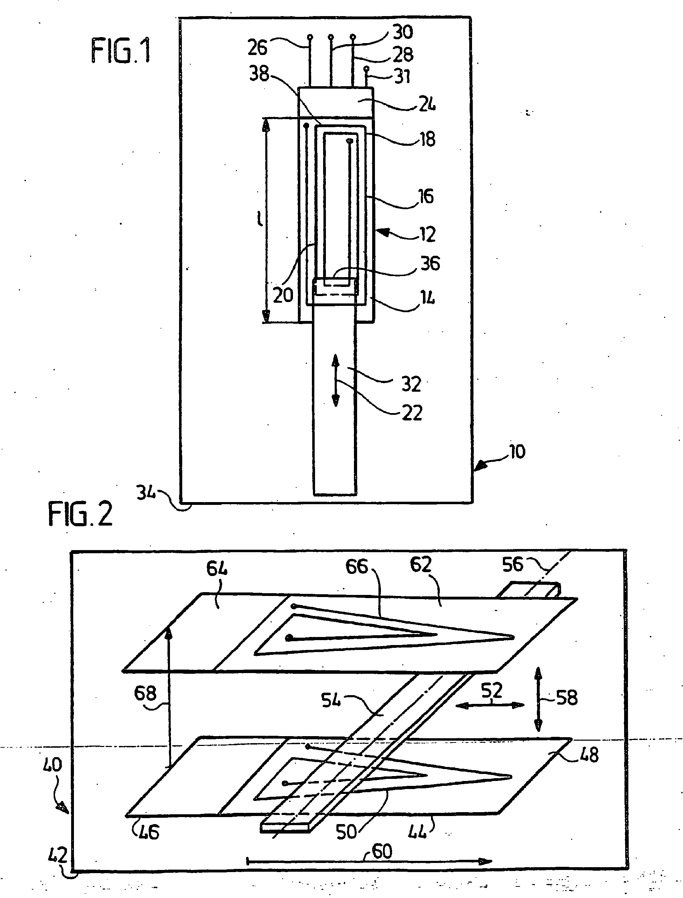

Bei einem ersten Beispiel eines Wegmeßsystems, welches in Figur 1 als Ganzes mit 10 bezeichnet ist, ist ein insbesondere stationärer Sensor 12 vorgesehen, welcher eine Platine 14 umfaßt, auf der eine Flachspule 16 als induktives Element sitzt. Die Flachspule 16 ist insbesondere eine Printspule, welche auf der Platine 14 aufgedruckt ist.

Die Flachspule 16 umfaßt eine Mehrzahl von Windungen 18 und nimmt dadurch einen Flächenbereich 20 ein. Bei dem in Figur 1 gezeigten Ausführungsbeispiel sind die Windungen im wesentlichen parallel beabstandet spiralförmig angeordnet. Die Windungen 18 weisen dadurch einen einheitlichen Windungssinn auf.

Es kann auch vorgesehen sein, daß die Windungen mäanderförmig mit alternierendem Windungssinn angeordnet sind (in der Zeichnung nicht gezeigt).

Die Flachspule 16 ist in einer Richtung 22 ausgerichtet und eine Länge I der Flachspule 16 definiert im wesentlichen die Wegstrecke, die mittels des erfindungsgemäßen Wegmeßsystems 10 meßbar ist.

Zur Auswertung eines Sensorsignals des Sensors 12 ist eine Auswerteeinheit 24 vorgesehen. Diese ist insbesondere auf der Platine 14 angeordnet, so daß Sensor 12 und Auswerteeinheit 24 auf der Platine 14 integriert sind. Die Auswerteeinheit 24 ist an sich bekannt. Sie weist beispielsweise zwei Spannungsversorgungseingänge 26, 28, einen Signalausgang 30 und fakultativ einen Fehlerausgang 31 auf. In die Auswerteeinheit 24 ist ein Oszillator integriert, an den die Flachspule 16 so gekoppelt ist, daß Kenngrößen des Oszillators wie Frequenz und Güte durch die Flachspule 16 beeinflußt sind. Alternativ dazu kann die Flachspule 16 selber die Induktivität eines Oszillators bilden.

Über die Flachspule 16 ist ein beispielsweise als Zunge oder als Bügel ausgebildeter Geber 32 aus einem metallischen Material schiebbar. Der Geber 32 ist ein passiver Geber, der direkt elektromagnetisch an die Flachspule 16 koppelt, ohne daß er strombeaufschlagt werden muß. Der Geber 32 ist dabei in einem Abstand oberhalb der Flachspule 16 (in Figur 1 ist dieser Abstand senkrecht zur Zeichenebene) an einem Gegenstand angeordnet, dessen relative Positionierung längs der Richtung 22 relativ zu dem Sensor 12 ermittelt werden soll.

Vorteilhaft ist es, wenn die Flachspule 16 durch einen "magnetischen Käfig" 34 abgeschirmt ist, der beispielsweise durch Ferritfolien oder dergleichen gebildet ist.

Das Wegmeßsystem 10 funktioniert dabei wie folgt:

Wird die metallische Zunge 32 in die Nähe der Flachspule 16 gebracht, dann erfolgt eine induktive Kopplung zwischen der Flachspule 16 und dem Geber 32. Dies hat zur Folge, daß sich die effektive Induktivität der Flachspule 16 und damit deren Güte aufgrund der elektromagnetischen Ankopplung des Gebers 32 ändert. Der Umfang der Änderung ist dabei davon abhängig, welche Fläche der Flachspule 16 durch den Geber 32 überdeckt wird, d. h. wie groß der Überlappungsbereich einer Projektion des Gebers 32 auf den Sensor 12 mit einem wirksamen Sensorbereich ist. Ist beispielsweise der Geber 32 außerhalb der Flachspule 16, dann ist der Überlappungsbereich Null und die effektive Induktivität, welche an der Flachspule 16 meßbar ist, entspricht im wesentlichen ihrer Induktivität ohne induktive Gegenkopplung eines Metallelements. Der maximale Überdeckungsbereich ist erreicht, wenn ein Ende 36 des Gebers 32 über einem Ende 38 der Flachspule 16 liegt und der Geber 32 über der Flachspule liegt, d. h. wenn die Flachspule 16 maximal überdeckt ist.

Das Sensorsignal, welches durch die Auswerteeinheit 24 ermittelt wird, ist dabei bestimmt durch die effektive Induktivität bzw. Güte der Flachspule 16; eine solche Größe ist insbesondere die Amplitude eines Schwingkreises des Oszillators, an den die Flachspule 16 gekoppelt ist. Diese Amplitude hängt ab von der Güte der Flachspule 16. Die Flachspule 16 kann dabei selber die Schwingkreisinduktivität bilden oder an eine weitere Schwingkreisspule gekoppelt sein und dadurch die Induktivität des Schwingkreises beeinflussen und damit wiederum dessen effektive Induktivität.

Da nun die effektive Induktivität der Flachspule 16 davon abhängt, wo das Ende 36 des Gebers 32 über der Flachspule 16 steht, da dadurch der Flächenbereich bestimmt ist, mit dem die Metallzunge 32 an die Flachspule koppeln kann, läßt sich über die Ermittlung der effektiven Induktivität der Flachspule 16 über die Güte eines Schwingkreises eindeutig ermitteln, wo sich das Ende 36 des Gebers 32 befindet. Dadurch wiederum läßt sich die relative Position zwischen Geber 32 und Sensor 12 bezogen auf die Richtung 22 eindeutig bestimmen und somit läßt sich durch die Vorrichtung 10 eine Wegmessung längs der Richtung 22 durchführen. Insbesondere läßt sich zu jedem Zeitpunkt feststellen, wie der Geber 32 relativ zu dem Sensor 12 positioniert ist.

Die Auswerteeinheit 24 überprüft insbesondere, ob die Güte/effektive Induktivität der Flachspule 16 innerhalb eines Toleranzbereichs liegt. Ist dies nicht der Fall, wird ein Signal auf den Fehlerausgang 31 gegeben. Beispielsweise läßt sich dadurch auf einfache Weise die Flachspule 16 auf Spulenbruch überwachen.

Bei einem zweiten Beispiel eines Wegmeßsystems, welches in Figur 2 als Ganzes mit 40 bezeichnet ist, ist in einem magnetischen Käfig 42 ein Sensor 44 angeordnet, an welchen eine Auswerteeinheit 46 angeschlossen ist. Dabei ist die Auswerteeinheit 46 grundsätzlich gleich ausgebildet wie die oben im Zusammenhang mit dem ersten Beispiel beschriebene Auswerteeinheit 24. Insbesondere ist die Auswerteeinheit 46 auf einer Sensorplatine 48 angeordnet.

Der Sensor 44 umfaßt eine Flachspule 50, die als Printspule auf der Sensorplatine 48 gebildet ist. Die Flachspule 50 ist mit dreieckförmigen Windungen gebildet und so orientiert, daß die Gestalt der Flachspule 50 quer zu einer Richtung 52, welche die Meßrichtung für die relative Position zwischen Sensor 44 und einem Geber 54 ist, längs dieser Meßrichtung 52 variiert.

Der Geber 54 ist durch eine Metallzunge gebildet, welche in ihrer Längsrichtung 56 quer zur Meßrichtung 52 orientiert ist und oberhalb der Flachspule 50 in einem Abstand in einer vertikalen Richtung 58 zu dieser positioniert ist.

Durch das Wegmeßsystem läßt sich die relative Position zwischen dem Geber 54 und dem Sensor 44 in der Meßrichtung 52 bestimmen. Wird der Geber in der Meßrichtung 52 verschoben, so ist, solange der Geber 54 oberhalb des Sensors 44 positioniert ist, die Projektionsfläche des Gebers 54 (Projektionsrichtung 58) auf den Sensor 44 unabhängig von der Position des Gebers 54 bezogen auf die Meßrichtung 52. Jedoch ist der Überlappungsbereich zwischen dieser Projektionsfläche und einem wirksamen Sensorbereich abhängig von dieser Position: Der wirksame Sensorbereich ist bestimmt durch einen Flächenbereich der Flachspule 50. Da dieser Flächenbereich aufgrund der dreieckförmigen Ausgestaltung der Flachspule 50 sich längs einer Wegstrecke 60 parallel zur Meßrichtung 52 ändert, ändert sich folglich der wirksame Sensorbereich. Die elektromagnetische Ankopplung der Metallzunge 54 als Gegeninduktivität an die Flachspule 50 ist davon abhängig, wie groß die mögliche Ankopplungsfläche der Flachspule 50 ist, d. h. wie groß der wirksame Sensorbereich ist. Da sich der wirksame Sensorbereich längs der Wegstrecke 60 ändert, ändert sich folglich dadurch auch die Ankopplung.

Durch Messung der effektiven Induktivität der Flachspule 50, welche durch die Ankopplung des Gebers 54 an die Flachspule 50 bestimmt ist, läßt sich dann eindeutig die Position des Gebers 54 auf der Wegstrecke 60 bestimmen. Durch Messung der Induktivität der Flachspule 50 oder einer davon abhängigen Größe wie der Güte eines Schwingkreises, an den die Flachspule 50 gekoppelt ist, kann somit die relative Position zwischen dem Geber 54 und dem Sensor 44 längs der Meßrichtung 52 ermittelt werden. Die Wegstrecke 60 ist dabei im wesentlichen durch die Länge der Flachspule 50 auf der Sensorplatine 48 bestimmt.

Bei einer Variante zu der beschriebenen Ein-Sensor-Anordnung ist, wie in Figur 2 gezeigt, ein weiterer Sensor 62 mit einer Auswerteeinheit 64 vorgesehen, wobei auf dem Sensor 62 eine Flachspule 66 angeordnet ist, welche im wesentlichen gleich ausgebildet ist wie die Flachspule 50. Der Sensor 62 ist insbesondere so angeordnet, daß die Flachspule 66 über der Flachspule 50 des Sensors 44 liegt.

Der Geber 54 ist zwischen dem Sensor 62 und dem Sensor 44 positioniert bzw. geführt (Zwei-Sensor-Anordnung).

Besonders vorteilhaft ist es, wenn die Zwei-Sensor-Anordnung eine Auswerteeinheit aufweist, der die beiden Sensoren 44 und 62 zugeordnet sind, so daß die Zwei-Sensor-Anordnung ein entsprechendes Meßsignal über die einzige Auswerteeinheit abgibt.

Grundsätzlich ist es so, daß das Sensorsignal, d. h. die effektive Induktivität der Flachspule 50 oder eine davon abhängige Größe, abhängt von dem Abstand zwischen Geber 54 und der Flachspule 50 als induktivem Element in der vertikalen Richtung 58. Insbesondere ist die Ankopplung der Metallzunge 54 als Gegeninduktivität an die Flachspule 50 desto stärker, je geringer dieser Abstand in der vertikalen Richtung 58 ist. Bei einer Variation dieses Abstands des Gebers 54 über der Flachspule 50 tritt also eine Signaländerung auf, die nicht durch eine Änderung der relativen Position zwischen Geber 54 und Sensor 44 längs der Meßrichtung 52 zustande kommt.

Durch den weiteren Sensor 62 lassen sich Änderungen des Abstands zwischen Geber 54 und Sensor 44 in der vertikalen Richtung 58 berücksichtigen. Dazu ist eine Differenzauswertung zwischen dem Sensorsignal der Flachspule 66 und der Flachspule 50 vorgesehen. Ein solches Differenzsignal ist dann im wesentlichen unabhängig von dem Abstand des Gebers 54 zu der Flachspule 50 (und damit auch von dem Abstand des Gebers 54 zu der Flachspule 66). Durch eine solche Auswertung läßt sich damit die Wegstrecke 60 längs der Meßrichtung 52 für die relative Position zwischen Geber 54 und Sensor 44 auch dann bestimmen, wenn sich der Abstand zwischen Geber 54 und Sensor 44 ändert.

Es kann dabei zusätzlich auch noch vorgesehen sein, daß eine Summenbildung des Sensorsignals der Flachspule 50 und der Flachspule 66 durchgeführt wird. Ein solches Summensignal hängt dann ab von dem Abstand des Gebers 54 zu dem Sensor 44 (und damit auch von dem Abstand zu dem Sensor 62). Da dieses Summensignal eine Abstandsinformation enthält, läßt sich aus ihm somit der Abstand zwischen dem Geber 54 und dem Sensor 44 ermitteln; es läßt sich also auch eine Wegstrecke 68 längs der Richtung 58 ermitteln.

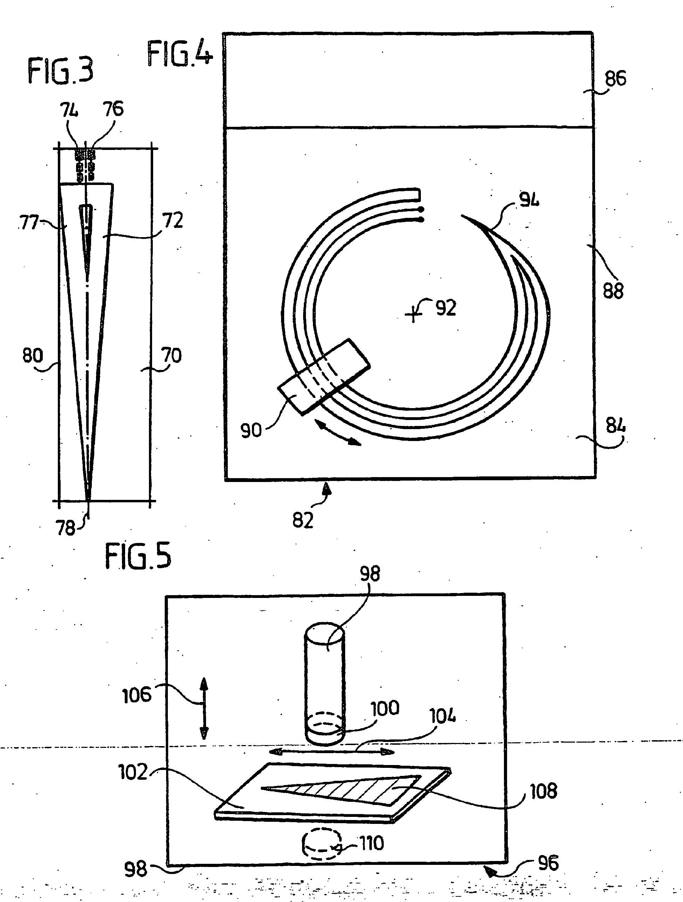

In der Figur 3 ist in Draufsicht eine kopierte Druckvorlage einer Platine 70 mit einer Printspule 72 in dreieckförmiger Gestalt gezeigt. Die Printspule 72 ist mit Stromanschlüssen 74 und 76 versehen, zwischen denen Windungen 77 verlaufen.

Eine Höhenlinie 78 der Dreieckstruktur ist im wesentlichen parallel zu einer längeren Platinenkante 80 ausgerichtet. Die Windungen 77 sind derart ausgebildet, daß sie jeweils dreieckförmig sind und die entsprechenden Windungsdreiecke im wesentlichen die Höhenlinie 78 aufweisen.

Es kann atternativ vorgesehen sein, daß das induktive Element auf einem flexiblen Träger wie einer Flexfolie angeordnet ist. Der Träger läßt sich dann an Konturen beispielsweise einer Maschine anpassen. Es können dabei beispielsweise auch wellenförmige Bewegungen eines Gebers erfaßt werden, wobei der Abstand zwischen Geber und Sensor durch Anpassung des Trägers an einen Untergrund konstant haltbar ist.

Ein Wegmeßsystem läßt sich dabei auch einsetzen für Winkelmessungen und insbesondere im Zusammenhang mit rotativ geführten Gebern (Drehgebern).

Bei einem dritten Beispiel, welches in Figur 4 als Ganzes mit 82 bezeichnet ist, sind ein Sensor 84 und eine Auswerteeinheit 86 auf einer Platine 88 angeordnet. Ein Geber 90, welcher insbesondere als Metallzunge ausgebildet ist, ist um eine Drehachse 92, welche im wesentlichen senkrecht zu der Platine 88 orientiert ist, relativ zu dieser auf einer Kreisbahn drehbar.

Auf dem Sensor 84 sitzt eine Flachspule 94. Diese Flachspule 94 ist insbesondere eine Printspule und derart ausgebildet, daß ihre Gestalt quer zu der Kreisbahn des Gebers 90 längs dieser Kreisbahn variiert. Dies ist beispielsweise dadurch erreichbar, daß eine dreieckförmige Struktur, wie in Figur 3 gezeigt, mit einer kreisförmigen Höhenlinie 78 ausgebildet wird, d. h. die dreieckförmige Struktur in eine Ringform gebracht wird. Eine derartige Gestalt der Flachspule 94 ist in Figur 4 gezeigt.

Das Wegmeßsystem gemäß dem dritten Beispiel 82 funktioniert grundsätzlich gleich wie die bereits oben beschriebenen Wegmeßsysteme. Der Geber 90 koppelt an die Induktivität 94. Die Kopplung ist dabei bestimmt durch den Überlappungsbereich einer Projektionsfläche des Gebers 90 auf den Sensor 84 und eines wirksamen Sensorbereichs, d. h. durch den Überlappungsbereich der Projektionsfläche des Gebers 90 auf die Flachspule 94. Da sich dieser Überlappungsbereich aufgrund der entsprechenden Ausgestaltung der Flachspule 94 längs der Kreisbahn des Gebers 90 ändert, läßt sich somit aus dem Sensorsignal eindeutig der Drehwinkel (modulo 2 π) bestimmen und somit die Position des Gebers 90 auf seiner Kreisbahn.

Bei einem vierten Beispiel, welches in Figur 5 als Ganzes mit 96 bezeichnet ist, ist innerhalb eines magnetischen Käfigs 98, welcher beispielsweise durch Ferritfolien oder dergleichen gebildet ist, ein induktiver Näherungsschalter 98 mit einem Sensor 100 angeordnet. Der Sensor umfaßt dabei einen Schwingkreis mit einem induktiven Element. Durch Annäherung eines metallischen Gegenstands werden die Kenngrößen des Schwingkreises verändert und insbesondere verändert sich dadurch die Güte des Schwingkreises. Diese Veränderung läßt sich messen. Derartige induktive Näherungsschalter werden insbesondere als Analogschalter eingesetzt, um ein analoges Schaltsignal zu generieren, wenn sich ein metallischer Gegenstand in einem bestimmten Schaltabstand dem Näherungsschalter 98 annähert.

Bei dem Wegmeßsystem gemäß dem vierten Beispiel 96 läßt sich über den Näherungsschalter 98 die relative Position zwischen einem Geber 102 und dem Sensor 100 in einer Richtung 104 (Meßrichtung) quer zu einer Abstandsrichtung 106 zwischen Sensor 100 und Geber 102 ermitteln. Der Geber 102 ist dabei derart ausgebildet, daß der Überdeckungsbereich der Sensorfläche zwischen dem Geber und dem Sensor mit seinem induktiven Element längs der Meßrichtung 104 variiert. Bei dem in Figur 5 gezeigten Beispiel ist auf dem zungenförmigen Geber 102 eine Struktur 108 in der Form einer Dreiecksfläche angeordnet. Diese Struktur ist beispielsweise durch ein Mu-Metall, eine Ferritschicht oder auch durch beschichtetes Platinenmaterial gebildet. Die Stärke der Ankopplung des Gebers 102 an den Sensor 100 ist bei der Struktur 108 anders als bei dem restlichen Geber. Dies bedeutet dann, daß die Struktur 108 einen wirksamen Geberbereich darstellt, welcher an den Sensor 100 koppelt und der in seiner Gestalt quer zu einer Meßwegstrecke längs der Richtung 104 variiert.

Dadurch, daß der wirksame Geberbereich quer zur Richtung 104 längs dieser Richtung variiert, variiert damit auch die elektromagnetische Ankopplung des Gebers 102 an den Näherungsschalter 98. Der Näherungsschalter 98 liefert dann ein eindeutiges Signal (beispielsweise die Güte eines Oszillators), welches abhängig ist von der relativen Position zwischen dem Geber 102 und dem Sensor 100. Aus diesem Signal läßt sich also die relative Position zwischen Sensor 100 und Geber 102 ermitteln. Die meßbare Wegstrecke längs der Meßrichtung 104 entspricht dabei im wesentlichen der Länge der Struktur 108 in der Meßrichtung 104.

Bei einer anderen Variante eines Beispiels ist bei dem Wegmeßsystem 96 ein weiterer Näherungsschalter 110 vorgesehen, welcher fluchtend mit dem Näherungsschalter 98 ausgerichtet ist und der Geber 102 ist zwischen diesen beiden Näherungsschaltern 98 und 110 geführt. Der Geber 102 ist dabei auf seiner dem Näherungsschalter 110 zugewandten Seite mit einer Struktur versehen, welche der Struktur 108 entspricht.

Durch eine Anordnung mit zwei Näherungsschaltern 98 und 110 und einem zwischen diesen geführten Geber 102 läßt sich bei einer Differenzauswertung der Signale der beiden Näherungsschalter 98, 110 die Abstandsabhängigkeit des Näherungsschaltersignals bezüglich des Abstands in der Abstandsrichtung 106 zwischen Sensor 100 und Geber 102 minimieren. Durch eine Summenauswertung der Signale der beiden Näherungsschalter 98 und 110 kann dieser Abstand auch direkt ermittelt werden.

Statt des Einsatzes von vorhandenen analogen Näherungsschaltern 98 bzw. 110 können als Sensoren auch direkt induktive Elemente vorgesehen werden, d. h. Spulen vorgesehen werden, die an eine Auswerteeinheit angeschlossen sind. Die Verwendung "fertiger" Näherungsschalter 98, 110 hat den Vorteil, daß aus dem Spannungssignal der Näherungsschalter bzw. dem Differenz-Spannungssignal direkt die relative Position zwischen Geber 102 und Sensor 110 längs der Meßrichtung 104 ablesbar ist.

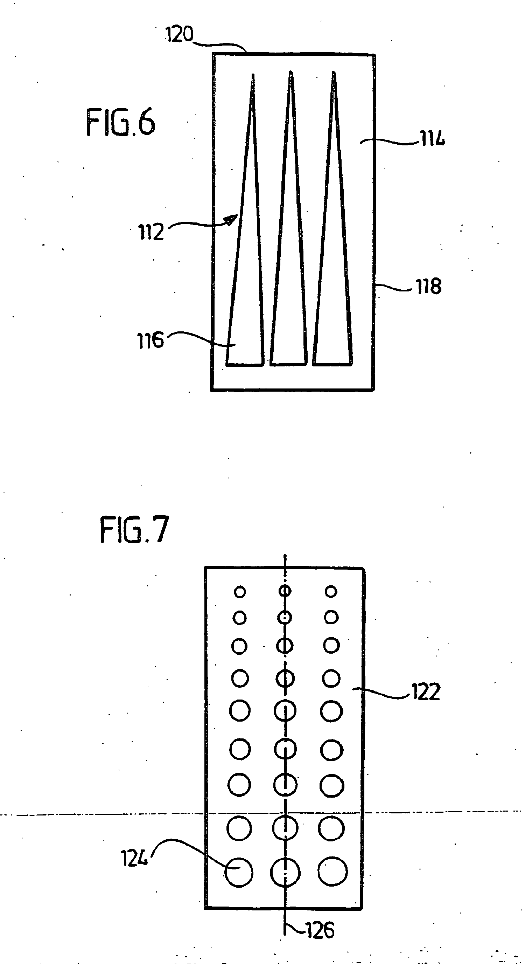

Bei einem weiteren Beispiel einer Struktur 112 auf einem Geber 114, um dadurch einen wirksamen Geberbereich zu schaffen, welcher quer zu der Meßrichtung 104 variiert, sind auf dem Geber 114 eine Mehrzahl von Dreiecksflächen 116 angeordnet. Eine solche Dreiecksfläche 116 ist beispielsweise durch ein Mu-Metall gebildet oder durch eine Ferritbeschichtung. Bei dem in Figur 6 gezeigten Ausführungsbeispiel umfaßt die Struktur 112 drei Dreiecksflächen 116. Die Höhenlinien der durch die Umrißkontur einer Dreiecksfläche 116 gebildeten Dreiecks sind dabei im wesentlichen parallel zu einer Seitenkante 118 des Gebers 114 ausgerichtet und die jeweiligen Höhenlinien der Dreiecksflächen 116 sind parallel beabstandet zueinander. Die Spitzen der Dreiecksfläche 116 liegen auf einer Linie parallel zu einer schmäleren Seitenkante 120 des Gebers 114.

Bei einem weiteren Beispiel eines Gebers 122, welches in Figur 7 gezeigt ist, ist der Geber mit durchgehenden Öffnungen 124 versehen, wobei sich die Öffnungsgröße und/oder die Öffnungsdichte der Öffnungen 124 quer zu einer Längsrichtung 126 des Gebers 122 ändert. Wird dann die Längsrichtung 126 längs der Meßrichtung 104 ausgerichtet, dann variiert der wirksame Geberbereich quer zur Meßrichtung 104 längs der Meßrichtung 104, so daß entsprechend die Stärke der Ankopplung des Gebers 122 an einen Sensor abhängig ist von der relativen Position zwischen Sensor und Geber 122 bezüglich der Meßrichtung 104.

Ein Geber kann dabei auch als Drehgeber ausgebildet sein, wobei dann eine entsprechende Struktur des Gebers auf einer Kreisbahn geführt ist und der wirksame Geberbereich auf der Kreisbahn quer zu dieser variiert. Dies kann beispielsweise dadurch erreicht werden, daß eine Dreiecksstruktur analog zu derjenigen, welche in den Figuren 5 oder 6 gezeigt ist, ringförmig ausgebildet ist; beispielsweise kann es alternativ dazu vorgesehen sein, daß eine Verteilung von Öffnungen analog zum Beispiel, welches in Figur 7 gezeigt ist, auf einer Kreisbahn angeordnet ist mit variierender Größe und/oder Dichte derart, daß der wirksame Geberbereich, durch welchen ein Sensor beaufschlagbar ist, längs einer Kreislinie quer zu der Kreislinie variiert.

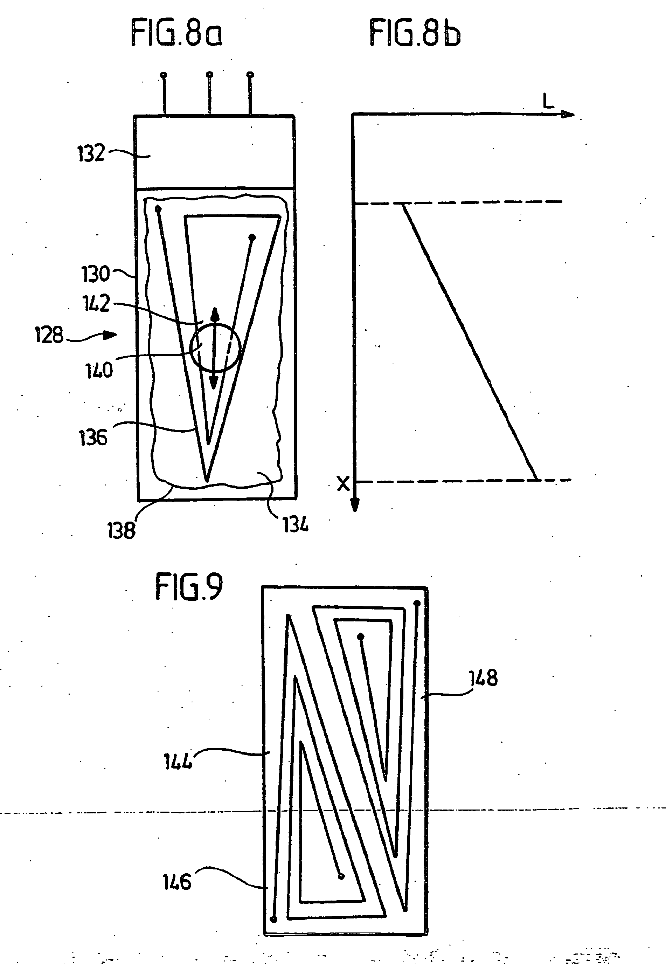

Bei einem fünften Beispiel, welches in Figur 8a als Ganzes mit 128 bezeichnet ist, ist auf einer Platine 130 eine Auswerteeinheit 132 und ein Sensor 134 angeordnet. Der Sensor 134 umfaßt dabei eine als Printspule ausgebildete Flachspule 136; diese entspricht in ihrer Ausgestaltung beispielsweise der Printspule 72, wie sie in Figur 3 gezeigt ist und entsprechend variiert ein wirksamer Sensorbereich quer zu einer Meßrichtung.

Auf der Platine 130 ist ein weichmagnetisches Material, angedeutet durch das Bezugszeichen 138, aufgebracht.

Bei einer Variante ist die Platine 130 mit dem weichmagnetischen Material umwickelt.

Als Geber ist ein Magnet 140 eingesetzt, dessen Position relativ zu dem Sensor 134 in einer Meßrichtung 142 variieren kann. Durch das Magnetfeld des Gebers 140 wird dabei die Flachspule 136 beaufschlagt und deren effektive Induktivität verändert.

Das Magnetfeld des Magnets 140 bringt das weichmagnetische Material 138 lokal in Sättigung. Durch diesen lokalen Sättigungseffekt verändert sich die effektive Induktivität der Flachspule 136. Da der Sättigungseffekt eben lokal ist und die Flachspule 136 in ihrer Gestalt quer zur Meßrichtung 142 variiert, ändert sich die Induktivität in Abhängigkeit von der Position des Magneten 140 über der Flachspule 136 längs der Meßrichtung 142.

Als weichmagnetisches Material wird beispielsweise ein Mu-Metall eingesetzt.

Es kann dabei alternativ oder zusätzlich vorgesehen sein, daß die Flachspule 136 in ihrer Gestalt längs der Meßrichtung im wesentlichen nicht variiert (vgl. beispielsweise die Flachspule 16 gemäß dem ersten Beispiel nach Figur 1), daß aber das weichmagnetische Material so aufgebracht ist, daß seine Gestalt quer zur Meßrichtung variiert. Beispielsweise ist dann ein dreieckförmiger Mu-Metallstreifen oder eine entsprechende Ferritbeschichtung auf der Platine 130 angeordnet. Dies bewirkt, daß ein wirksamer Sensorbereich längs der Meßrichtung quer zur Meßrichtung variiert.

Aufgrund der relativ starken Feldbeaufschlagung der Flachspule 136 durch den Magneten 140 läßt sich die effektive Induktivität einfach messen, da insbesondere Signalhübe in der Größenordnung von 20 % oder mehr auftreten können. Die Induktivität selber läßt sich beispielsweise über eine Frequenzmessung einer Oszillatorfrequenz eines Oszillators, an den die Flachspule 136 gekoppelt ist, bestimmen. Die Frequenz hängt dabei von der Wurzel aus der effektiven Induktivität der Flachspule 136 ab.

Bei entsprechender Ausgestaltung der Flachspule 136 (bzw. entsprechender Strukturierung des weichmagnetischen Materials 138) ist die Änderung der Induktivität über der Wegmeßstrecke, d. h. über den relativen Abstand zwischen dem Geber 140 und dem Sensor 134 in der Meßrichtung 142, im wesentlichen linear, wie in Figur 8b angedeutet.

Bei einer Ausführungsform induktiver Elemente, welche in Figur 9 gezeigt ist, umfaßt ein Sensor 144 zwei Flachspulen 146 und 148, welche in dreieckigen Windungen ausgebildet und gegenläufig zueinander angeordnet sind. Dadurch ist ein Differentialsystem zweier Flachspulen 146, 148 bereitgestellt. Auf diese Weise kann insbesondere die Genauigkeit der Wegbestimmung verbessert werden bzw. der Einfluß von Störungen läßt sich verringern.

Es kann auch vorgesehen sein, daß der Geber 140 zwischen zwei Flachspulen 136 geführt ist, welche gleichsinnig (vgl. Figur 2) oder gegenläufig angeordnet sein können. Dadurch kann die Abstandsabhängigkeit eines Sensorsignals von dem Abstand des Gebers 140 relativ zu dem Sensor 144 reduziert werden.

Bei dem Wegmeßsystem wird der Sensor mit den Flachspulen bzw. der Geber entsprechend der vorgesehenen Anwendung ausgebildet. Die Strukturierung der Flachspulen insbesondere bezüglich deren Länge, deren Windungszahl und deren Formgebung bzw. die Ausbildung einer Struktur auf dem Geber beeinflußt dabei die Meßbereichslänge, die Meßgenauigkeit und die Meßauflösung. Erfindungsgemäß lassen sich absolute Wegmessungen mit einer Auflösungsgenauigkeit von mindestens einem Tausendstel des Meßwegs erreichen. Als Geber muß dabei kein aktives Element eingesetzt werden, sondern es genügt ein passives Element, welches elektromagnetisch an den Sensor koppelt, insbesondere durch Bereitstellung einer Gegeninduktivität. Die induktiven Elemente des Sensors lassen sich dabei insbesondere als Flachspulen ausbilden, die gedruckt werden können und bei denen eine weitaus geringere Herstellungsstreuung als beispielsweise bei gewickelten Spulen auftritt.

Erfindungsgemäß steckt die Ortsinformation bezüglich der relativen Positionierung zwischen Sensor und Geber in der geometrischen Struktur der Flachspule (bzw. einer weichmagnetischen Struktur) und/oder des Gebers und in deren relativer Positionierung. Wirksame Geberbereiche, welche an einen Sensor koppeln bzw. wirksame Sensorbereiche, an welchen ein Geber gekoppelt ist, variieren längs einer Meßrichtung der relativen Positionierung zwischen Sensor und Geber und aus dieser Variation läßt sich eine absolute Wegstrecke berührungslos ermitteln. Es ist dabei grundsätzlich gleichgültig, ob der Geber oder der Sensor an einem beweglichen Element angeordnet ist. Durch entsprechende geometrische Ausgestaltung des wirksamen Sensorbereichs und/oder wirksamen Geberbereichs läßt sich gezielt eine bestimmte Kennlinie des erfindungsgemäßen Wegmeßsystems einstellen.

Die Ortsinformation wird direkt über die effektive Induktivität der induktiven Elemente und/oder die Güteänderung ausgelesen. Letztere läßt sich auf einfache Weise beispielsweise über die Amplitude oder die Frequenz eines Oszillators bestimmen, an den die induktiven Elemente gekoppelt sind.

## Patentansprüche

1. Wegmeßsystem mit einem Geber (54; 90; 140), einem Sensor (44; 84; 134), welcher eine Mehrzahl induktiver Elemente (146, 148) umfaßt, an die der Geber elektromagnetisch koppelt, und mit einer Auswerteeinheit (46; 86; 132) für Sensorsignale, wobei Sensor und Geber relativ zueinander positionierbar sind und der Sensor eine Mehrzahl von durch die induktiven Elemente (146, 148) gebildete Spuren umfaßt,
**dadurch gekennzeichnet , daß** die Güte und/oder effektive Induktivität der induktiven Elemente (146, 148) ausgewertet wird, welche bestimmt ist durch die Größe eines wirksamen Sensorbereichs, an den der Geber koppelt, daß die induktiven Elemente (146, 148) derart ausgebildet sind, daß ihre Gestalt quer zu einer Meßwegstrecke (60) längs der Meßwegstrecke (60) variiert, so daß die Größe des wirksamen Sensorbereichs, an den der Geber koppelt, abhängig ist von der relativen Position zwischen Geber und Sensor quer zu einer Abstandsrichtung (58; 106) zwischen diesen, daß der Geber (140) einen Magneten umfaßt, daß an oder in der Nähe der induktiven Elemente (146, 148) ein weichmagnetisches Material (138) angeordnet ist, daß benachbarte Spuren gegenläufig ausgebildet sind, und daß eine Differenzbildung bezüglich Sensorsignalen gegenläufiger Spuren erfolgt.

2. Wegmeßsystem nach Anspruch 1, **dadurch gekennzeichnet, daß** der Sensor (44; 84; 134) so ausgebildet ist, daß ein Überlappungsbereich zwischen einer Projektion einer wirksamen Geberfläche auf den Sensor mit einer wirksamen Sensorfläche abhängig ist von der relativen Position zwischen Sensor und Geber quer zur Projektionsrichtung (58; 106).

3. Wegmeßsystem nach Anspruch 1 oder 2, **dadurch gekennzeichnet, daß** die induktiven Elemente (146, 148) an einen Oszillator gekoppelt sind und über ihre Güte und/oder effektive Induktivität diesen beeinflussen.

4. Wegmeßsystem nach Anspruch 3, **dadurch gekennzeichnet, daß** die Auswerteeinheit (132) eine Kenngröße des Oszillators ermittelt.

5. Wegmeßsystem nach Anspruch 4, **dadurch gekennzeichnet, daß** eine Frequenz des Oszillators ermittelt wird.

6. Wegmeßsystem nach Anspruch 4, **dadurch gekennzeichnet, daß** eine Amplitude des Oszillators ermittelt wird.

7. Wegmeßsystem nach einem der vorangehenden Ansprüche, **dadurch gekennzeichnet, daß** die induktiven Elemente (146, 148) flächig ausgebildet sind.

8. Wegmeßsystem nach Anspruch 7, **dadurch gekennzeichnet, daß** die induktiven Elemente (146, 148) als Printspule ausgebildet sind.

9. Wegmeßsystem nach einem der vorangehenden Ansprüche, **dadurch gekennzeichnet, daß** die Auswerteeinheit (132) auf einer Platine (130) angeordnet ist, auf welcher die induktiven Elemente (146, 148) sitzen.

10. Wegmeßsystem nach einem der vorangehenden Ansprüche, **dadurch gekennzeichnet, daß** die meßbare Wegstrecke zwischen Geber (54; 90; 140) und Sensor (44; 84; 134) im wesentlichen durch eine Länge der induktiven Elemente (146, 148) bestimmt ist.

11. Wegmeßsystem nach einem der vorangehenden Ansprüche, **dadurch gekennzeichnet, daß** der Geber (54; 90) ein passives Element ist.

12. Wegmeßsystem nach einem der vorangehenden Ansprüche, **dadurch gekennzeichnet, daß** das weichmagnetische Material (138) derart angeordnet ist, daß es an einem wirksamen Sensorbereich lokal in Sättigung bringbar ist.

13. Wegmeßsystem nach einem der vorangehenden Ansprüche, **dadurch gekennzeichnet, daß** auf einer Platine (130), auf welcher die induktiven Elemente (146, 148) sitzen, das weichmagnetische Material (138) aufgebracht Ist.

14. Wegmeßsystem nach einem der vorangehenden Ansprüche, **dadurch gekennzeichnet, daß** eine Platine (130), auf welcher die induktiven Elemente (146, 148) sitzen, mit dem weichmagnetischen Material (138) umwickelt ist.

15. Wegmeßsystem nach einem der vorangehenden Ansprüche, **dadurch gekennzeichnet, daß** das welchmagnetische Material in einer derartigen Form angeordnet ist, daß die Formabmessungen quer zu einer Meßwegstrecke längs der Meßwegstrecke variieren.

16. Wegmeßsystem nach Anspruch 15, **dadurch gekennzeichnet, daß** das weichmagnetische Material dreieckförmig angeordnet ist.

17. Wegmeßsystem nach einem der vorangehenden Ansprüche, **dadurch gekennzeichnet, daß** die induktiven Elemente (146, 148) dreieckförmige Windungen aufweisen.

18. Wegmeßsystem nach einem der vorangehenden Ansprüche, **dadurch gekennzeichnet, daß** zur Messung von Drehungen die induktiven Elemente sich in einem Winkelbereich erstrecken.

19. Wegmeßsystem nach Anspruch 18, **dadurch gekennzeichnet, daß** der Winkelbereich im wesentlichen einen Vollkreis umfaßt.

20. Wegmeßsystem nach einem der vorangehenden Ansprüche, **dadurch gekennzeichnet, daß** der Geber ein elektrisch oder magnetisch leitendes Element (32; 54; 90; 102) umfaßt.

21. Wegmeßsystem nach einem der vorangehenden Ansprüche, **dadurch gekennzeichnet, daß** ein projizierter Überdeckungsbereich zwischen einem wirksamen Geberbereich und den induktiven Elementen (146, 148) längs einer Wegmeßstrecke variiert.

22. Wegmeßsystem nach Anspruch 21, **dadurch gekennzeichnet, daß** der Geber (102; 114; 122) so ausgebildet ist, daß ein wirksamer Geberbereich, welcher an die induktiven Elemente (146, 148) koppelt, in seiner Gestalt quer zu einer Meßwegstrecke längs der Meßwegstrecke variiert.

23. Wegmeßsystem nach Anspruch 22, **dadurch gekennzeichnet, daß** der Geber (102; 114) mit einer dreieckförmigen Struktur (108; 112) versehen ist.

24. Wegmeßsystem nach Anspruch 22 oder 23, **dadurch gekennzeichnet, daß** der wirksame Geberbereich durch eine Beschichtung (108; 112) auf dem Geber (102; 114) gebildet ist.

25. Wegmeßsystem nach einem der Ansprüche 22 bis 24, **dadurch gekennzeichnet, daß** der Geber (122) mit Ausnehmungen (124) versehen ist.

26. Wegmeßsystem nach einem der Ansprüche 22 bis 25, **dadurch gekennzeichnet, daß** der Sensor von einem induktiven Näherungssensor (98) mit einem Schwingkreis, welcher ein induktives Element aufweist, umfaßt ist.

27. Wegmeßsystem nach einem der Ansprüche 20 bis 26, **dadurch gekennzeichnet, daß** eine magnetische Abschirmung (34, 42, 98) für die induktiven Elemente vorgesehen ist.

28. Wegmeßsystem nach einem der vorangehenden Ansprüche, **dadurch gekennzeichnet, daß** eine Mehrzahl von induktiven Elementen (50, 66; 100; 110) bezüglich des Gebers (54; 102) so angeordnet und beschaltet sind, daß eine Wegmessung durchführbar ist, die im wesentlichen unabhängig von dem Abstand des Gebers (54; 102) zu dem Sensor ist.

29. Wegmeßsystem nach Anspruch 28, **dadurch gekennzeichnet, daß** ein Geber (54; 102) zwischen zwei in einem Abstand angeordneten induktiven Elementen (50, 66; 100, 110) positioniert ist.

30. Wegmeßsystem nach Anspruch 29, **dadurch gekennzeichnet, daß** die induktiven Elemente gegenläufig geführt sind.

31. Wegmeßsystem nach Anspruch 29 oder 30, **dadurch gekennzeichnet, daß** eine Differenzbildung bezüglich Sensorsignalen der beiden induktiven Elemente (50, 66; 100, 110) durchgeführt wird.

32. Wegmeßsystem nach einem der Ansprüche 29 bis 31, **dadurch gekennzeichnet, daß** eine Summenbildung bezüglich Sensorsignalen der beiden induktiven Elemente (50, 66; 100, 110) durchgeführt wird.

33. Wegmeßsystem nach einem der vorangehenden Ansprüche, **dadurch gekennzeichnet, daß** die induktiven Elemente auf einem flexiblen Träger angeordnet sind.

34. Wegmeßsystem nach Anspruch 33, **dadurch gekennzeichnet, daß** die induktiven Elemente auf einer Flexfolie angeordnet sind.

35. Wegmeßsystem nach einem der vorangehenden Ansprüche, **dadurch gekennzeichnet, daß** der Sensor und/oder der Geber so ausgebildet sind, daß über die entsprechende Formgebung ein bestimmter Kennlinienverlauf des Wegmeßsystems für ein Sensorsignal in Abhängigkeit eines Meßwegs eingestellt ist.

36. Wegmeßsystem nach einem der vorangehenden Ansprüche, **dadurch gekennzeichnet, daß** von der Auswerteeinheit ein Fehlersignal abzweigbar ist, wobei durch die Auswerteeinheit überprüfbar ist, ob ein oder mehrere Parameter des induktiven Elements innerhalb eines Toleranzintervalls liegen.

## Claims

1. Position measuring system with a transmitter (54; 90; 140), a sensor (44; 84; 134) comprising a plurality of inductive elements (146, 148) to which the transmitter is coupled electromagnetically, and with an evaluating unit (46; 86; 132) for sensor signals, the sensor and the transmitter being positionable relative to one another, and the sensor comprising a plurality of tracks formed by the inductive elements (146, 148), **characterised in that** the Q factor and/or the effective inductance of the inductive elements (146, 148) is evaluated, which is determined by the size of an effective sensor region to which the transmitter is coupled, **in that** the inductive elements (146, 148) are formed in such a manner that their shape transverse to a measurement path (60) varies along the measurement path (60), so that the size of the effective sensor region to which the transmitter is coupled is dependent on the relative position between the transmitter and the sensor in a direction transverse to a direction of spacing (58; 106) therebetween, **in that** the transmitter (140) comprises a magnet, **in that** a soft magnetic material (138) is arranged at or in the vicinity of the inductive elements (146, 148), **in that** adjacent tracks are formed in opposite directions, and **in that** a formation of the difference is carried out with regard to sensor signals of tracks running in opposite directions.

2. Position measuring system in accordance with claim 1, **characterised in that** the sensor (44; 84; 134) is formed in such a manner that an overlapping region between a projection of an effective transmitter surface area onto the sensor having an effective sensor surface area is dependent on the relative position between the sensor and the transmitter in a direction transverse to the direction of projection (58; 106).

3. Position measuring system in accordance with claim 1 or 2, **characterised in that** the inductive elements (146, 148) are coupled to an oscillator which is affected by their Q factor and/or effective inductance.

4. Position measuring system in accordance with claim 3, **characterised in that** the evaluating unit (132) determines a characteristic value of the oscillator.

5. Position measuring system in accordance with claim 4, **characterised in that** a frequency of the oscillator is determined.

6. Position measuring system in accordance with claim 4, **characterised in that** an amplitude of the oscillator is determined.

7. Position measuring system in accordance with any of the preceding claims, **characterised in that** the inductive elements (146, 148) are of flat configuration.

8. Position measuring system in accordance with claim 7, **characterised in that** the inductive elements (146, 148) are in the form of a printed coil.

9. Position measuring system in accordance with any of the preceding claims, **characterised in that** the evaluating unit (132) is arranged on a circuit board (130) upon which the inductive elements (146, 148) are seated.

10. Position measuring system in accordance with any of the preceding claims, **characterised in that** the measurable distance between the transmitter (54; 90; 140) and the sensor (44; 84; 134) is essentially determined by a linear dimension of the inductive elements (146, 148).

11. Position measuring system in accordance with any of the preceding claims, **characterised in that** the transmitter (54; 90) is a passive element.

12. Position measuring system in accordance with any of the preceding claims, **characterised in that** the soft magnetic material (138) is arranged in such a manner that it can be brought into a state of local saturation in an effective sensor region.

13. Position measuring system in accordance with any of the preceding claims, **characterised in that** the soft magnetic material (138) is deposited on a circuit board (130) upon which the inductive elements (146, 148) are seated.

14. Position measuring system in accordance with any of the preceding claims, **characterised in that** a circuit board (130), upon which the inductive elements (146, 148) are seated, has the soft magnetic material (138) wound therearound.

15. Position measuring system in accordance with any of the preceding claims, **characterised in that** the soft magnetic material is arranged in a form such that the dimensions of its shape transverse to a measurement path vary along the measurement path.

16. Position measuring system in accordance with claim 15, **characterised in that** the soft magnetic material is arranged in the form of a triangle.

17. Position measuring system in accordance with any of the preceding claims, **characterised in that** the inductive elements (146, 148) comprise triangular windings.

18. Position measuring system in accordance with any of the preceding claims, **characterised in that** the inductive elements extend over an angular range for the purpose of measuring revolutions.

19. Position measuring system in accordance with claim 18, **characterised in that** the angular range comprises a substantially full circle.

20. Position measuring system in accordance with any of the preceding claims, **characterised in that** the transmitter comprises an electrically or magnetically conductive element (32; 54; 90; 102).

21. Position measuring system in accordance with any of the preceding claims, **characterised in that** a projected overlapping area between an effective transmitter area and the inductive elements (146, 148) varies along a measurement path.

22. Position measuring system in accordance with claim 21, **characterised in that** the transmitter (102; 114; 122) is formed in such a manner that an effective transmitter region, which is coupled to the inductive elements (146, 148), varies in its shape transverse to a measurement path along the measurement path.

23. Position measuring system in accordance with claim 22, **characterised in that** the transmitter (102; 114) is provided with a triangular structure (108; 112).

24. Position measuring system in accordance with claim 22 or 23, **characterised in that** the effective transmitter region is formed by a coating (108; 112) on the transmitter (102; 114).

25. Position measuring system in accordance with any of claims 22 to 24, **characterised in that** the transmitter (122) is provided with recesses (124).

26. Position measuring system in accordance with any of claims 22 to 25, **characterised in that** the sensor is comprised by an inductive proximity sensor (98) which comprises an oscillatory circuit with an inductive element.

27. Position measuring system in accordance with any of claims 20 to 26, **characterised in that** a magnetic screening means (34, 42, 98) is provided for the inductive elements.

28. Position measuring system in accordance with any of the preceding claims, **characterised in that** a plurality of inductive elements (50, 66; 100; 110) are so arranged and interconnected with reference to the transmitter (54; 102) that a position measurement can be carried out, which is substantially independent of the spacing of the transmitter (54; 102) from the sensor.

29. Position measuring system in accordance with claim 28, **characterised in that** a transmitter (54; 102) is positioned between two mutually spaced inductive elements (50, 66; 100, 110).

30. Position measuring system in accordance with claim 29, **characterised in that** the inductive elements are directed in opposite directions.

31. Position measuring system in accordance with claim 29 or 30, **characterised in that** a formation of the difference with regard to sensor signals from the two inductive elements (50, 66; 100, 110) is carried out.

32. Position measuring system in accordance with any of claims 29 to 31, **characterised in that** a formation of the sum with regard to sensor signals from the two inductive elements (50, 66; 100, 110) is carried out.

33. Position measuring system in accordance with any of the preceding claims, **characterised in that** the inductive elements are arranged on a flexible support means.

34. Position measuring system in accordance with claim 33, **characterised in that** the inductive elements are arranged on a flexible foil.

35. Position measuring system in accordance with any of the preceding claims, **characterised in that** the sensor and/or the transmitter are constructed in such a manner that, by virtue of the corresponding shaping, a certain characteristic curve of the position measuring system is established for a sensor signal in dependence on a measurement path.

36. Position measuring system in accordance with any of the preceding claims, **characterised in that** an error signal is derivable from the evaluating unit, and the evaluating unit can be checked as to whether one or more parameters of the inductive element lie within a tolerance range.

## Revendications

1. Système de mesure de déplacement avec un transmetteur (54 ; 90 ; 140), un capteur (44 ; 84 ; 134) qui comporte une pluralité d'éléments inductifs (146, 148), auxquels le transmetteur est couplé par voie électromagnétique, et avec une unité d'évaluation (46 ; 86 ; 132) pour des signaux de capteur, le capteur et le transmetteur pouvant être positionnés relativement l'un par rapport à l'autre et le capteur comportant une pluralité de pistes formées par les éléments inductifs (146, 148)
**caractérisé en ce que** la qualité et/ou l'inductance effective des éléments inductifs (146, 148) est évaluée, laquelle est déterminée par la grandeur d'une zone de capteur active, à laquelle le transmetteur est couplé, **en ce que** les éléments inductifs (146, 148) sont réalisés de telle manière que leur forme varie transversalement à une voie de déplacement de mesure (60) le long de la voie de déplacement de mesure (60) de sorte que la grandeur de la zone de capteur active, à laquelle le transmetteur est couplé, dépende de la position relative entre le transmetteur et le capteur transversalement à un sens d'écartement (58 ; 106) entre ceux-ci, **en ce que** le transmetteur (140) comporte un aimant, **en ce qu'**un matériau magnétique doux (138) est agencé sur ou à proximité des éléments inductifs (146, 148), **en ce que** des pistes contiguës sont réalisées en sens inverse, et **en ce qu'**une soustraction par rapport aux signaux de détecteur de pistes en sens inverse est réalisée.

2. Système de mesure de déplacement selon la revendication 1, **caractérisé en ce que** le capteur (44 ; 84 ; 134) est réalisé de sorte qu'une zone de chevauchement entre une projection d'une surface de transmetteur active sur le capteur avec une surface de capteur active dépende de la position relative entre le capteur et le transmetteur transversalement au sens de projection (58 ; 106).

3. Système de mesure de déplacement selon la revendication 1 ou 2, **caractérisé en ce que** les éléments inductifs (146, 148) sont couplés à un oscillateur et l'influencent par leur qualité et/ou inductance effective.

4. Système de mesure de déplacement selon la revendication 3, **caractérisé en ce que** l'unité d'évaluation (132) détermine une grandeur caractéristique de l'oscillateur.

5. Système de mesure de déplacement selon la revendication 4, **caractérisé en ce qu'**une fréquence de l'oscillateur est déterminée.

6. Système de mesure de déplacement selon la revendication 4, **caractérisé en ce qu'**une amplitude de l'oscillateur est déterminée.

7. Système de mesure de déplacement selon l'une quelconque des revendications précédentes, **caractérisé en ce que** les éléments inductifs (146, 148) sont réalisés à plat.

8. Système de mesure de déplacement selon la revendication 7, **caractérisé en ce que** les éléments inductifs (146, 148) sont réalisés comme une bobine imprimée.

9. Système de mesure de déplacement selon l'une quelconque des revendications précédentes, **caractérisé en ce que** l'unité d'évaluation (132) est agencée sur une platine (130), sur laquelle logent les éléments inductifs (146, 148).

10. Système de mesure de déplacement selon l'une quelconque des revendications précédentes, **caractérisé en ce que** la voie de déplacement mesurable entre le transmetteur (54 ; 90 ; 140) et le capteur (44 ; 84 ; 134) est sensiblement déterminée par une longueur des éléments inductifs (146, 148).

11. Système de mesure de déplacement selon l'une quelconque des revendications précédentes, **caractérisé en ce que** le transmetteur (54 ; 90) est un élément passif.

12. Système de mesure de déplacement selon l'une quelconque des revendications précédentes, **caractérisé en ce que** le matériau magnétique doux (138) est agencé de manière à pouvoir être amené en saturation localement sur une zone de capteur active.

13. Système de mesure de déplacement selon l'une quelconque des revendications précédentes, **caractérisé en ce que** le matériau magnétique doux (138) est mis sur une platine (130), sur laquelle logent les éléments inductifs (146, 148).

14. Système de mesure de déplacement selon l'une quelconque des revendications précédentes, **caractérisé en ce qu'**une platine (130), sur laquelle logent les éléments inductifs (146, 148), est enroulée avec le matériau magnétique doux (138).

15. Système de mesure de déplacement selon l'une quelconque des revendications précédentes, **caractérisé en ce que** le matériau magnétique doux est agencé dans une telle forme que les dimensions de forme varient transversalement à une voie de déplacement de mesure le long de la voie de déplacement de mesure.

16. Système de mesure de déplacement selon la revendication 15, **caractérisé en ce que** le matériau magnétique doux est agencé en forme de triangle.

17. Système de mesure de déplacement selon l'une quelconque des revendications précédentes, **caractérisé en ce que** les éléments inductifs (146, 148) présentent des enroulements triangulaires.

18. Système de mesure de déplacement selon l'une quelconque des revendications précédentes, **caractérisé en ce que** les éléments inductifs s'étendent dans une zone angulaire pour la mesure de rotations.

19. Système de mesure de déplacement selon la revendication 18, **caractérisé en ce que** la zone angulaire comporte sensiblement un cercle entier.

20. Système de mesure de déplacement selon l'une quelconque des revendications précédentes, **caractérisé en ce que** le transmetteur comporte un élément (32 ; 54 ; 90 ; 102) conducteur électrique ou magnétique.

21. Système de mesure de déplacement selon l'une quelconque des revendications précédentes, **caractérisé en ce qu'**une zone de recouvrement projetée entre une zone de transmetteur active et les éléments inductifs (146, 148) varie le long d'une voie de mesure de déplacement.

22. Système de mesure de déplacement selon la revendication 21, **caractérisé en ce que** le transmetteur (102 ; 114 ; 122) est réalisé de sorte qu'une zone de transmetteur active qui est couplée aux éléments inductifs (146, 148) varie dans sa forme transversalement à une voie de déplacement de mesure le long de la voie de déplacement de mesure.

23. Système de mesure de déplacement selon la revendication 22, **caractérisé en ce que** le transmetteur (102 ; 114) est pourvu d'une structure triangulaire (108 ; 112).

24. Système de mesure de déplacement selon la revendication 22 ou 23, **caractérisé en ce que** la zone de transmetteur active est formée par un revêtement (108 ; 112) sur le transmetteur (102 ; 114).

25. Système de mesure de déplacement selon l'une quelconque des revendications 22 à 24, **caractérisé en ce que** le transmetteur (122) est pourvu d'évidements (124).

26. Système de mesure de déplacement selon l'une quelconque des revendications 22 à 25, **caractérisé en ce que** le capteur est compris par un capteur de proximité (98) inductif qui présente un circuit oscillant qui présente un élément inductif.

27. Système de mesure de déplacement selon l'une quelconque des revendications 20 à 26, **caractérisé en ce qu'**un blindage magnétique (34, 42, 98) est prévu pour les éléments inductifs.

28. Système de mesure de déplacement selon l'une quelconque des revendications précédentes, **caractérisé en ce qu'**une pluralité d'éléments inductifs (50, 66 ; 100 ; 110) est agencée et câblée par rapport au transmetteur (54 ; 102) de sorte qu'une mesure de déplacement puisse être réalisée, laquelle ne dépend pas sensiblement de la distance entre le transmetteur (54 ; 102) et le capteur.

29. Système de mesure de déplacement selon la revendication 28, **caractérisé en ce qu'**un transmetteur (54 ; 102) est positionné entre deux éléments inductifs (50, 66 ; 100, 110) agencés à une distance.

30. Système de mesure de déplacement selon la revendication 29, **caractérisé en ce que** les éléments inductifs sont guidés en sens inverse.

31. Système de mesure de déplacement selon la revendication 29 ou 30, **caractérisé en ce qu'**une soustraction par rapport aux signaux de capteur des deux éléments inductifs (50, 66 ; 100, 110) est réalisée.

32. Système de mesure de déplacement selon l'une quelconque des revendications 29 à 31, **caractérisé en ce qu'**une addition par rapport aux signaux de capteur des deux éléments inductifs (50, 66 ; 100, 110) est réalisée.

33. Système de mesure de déplacement selon l'une quelconque des revendications précédentes, **caractérisé en ce que** les éléments inductifs sont agencés sur un support flexible.

34. Système de mesure de déplacement selon la revendication 33, **caractérisé en ce que** les éléments inductifs sont agencés sur un film flexible.

35. Système de mesure de déplacement selon l'une quelconque des revendications précédentes, **caractérisé en ce que** le capteur et/ou le transmetteur sont réalisés de sorte qu'une courbe caractéristique déterminée du système de mesure de déplacement pour un signal de capteur soit réglée par la formation correspondante en fonction d'un déplacement de mesure.

36. Système de mesure de déplacement selon l'une quelconque des revendications précédentes, **caractérisé en ce qu'**un signal d'erreur peut être dérivé de l'unité d'évaluation, l'unité d'évaluation pouvant vérifier si un ou plusieurs paramètres de l'élément inductif se trouvent dans un intervalle de tolérance.
